# EUROPEAN PATENT SPECIFICATION

(11) **EP 4 207 424 B1**
(45) Date of publication and mention of the grant of the patent: **27.08.2025**
(21) Application number: 22849759.0
(22) Date of filing: 12.07.2022
(51) Int. Cl.: H01M 10/0567, H01M 10/0569, H01M 10/052, H01M 4/38, H01M 4/136, H01M 4/58, H01M 6/16, H01M 10/0568

(54) **ELECTROLYTE FOR LITHIUM-SULFUR BATTERY AND LITHIUM-SULFUR BATTERY COMPRISING SAME**
ELEKTROLYT FÜR LITHIUM-SCHWEFEL-BATTERIE UND LITHIUM-SCHWEFEL-BATTERIE DAMIT
ÉLECTROLYTE POUR ACCUMULATEUR LITHIUM/SOUFRE ET ACCUMULATEUR LITHIUM/SOUFRE LE COMPRENANT

(30) Priority: 30.07.2021 KR 20210100729
(43) Date of publication of application: 05.07.2023
(73) Proprietor: LG Energy Solution, Ltd., Seoul 07335 (KR); Seoul National University R & DB Foundation, Seoul 08826 (KR)
(72) Inventor: LEE, Kyu Tae, Seoul 06610 (KR); HAN, Dong Hyeop, Daejeon 34122 (KR); YANG, Hongsun, Seoul 08787 (KR); SOHN, Kwonnam, Daejeon 34122 (KR); KIM, Yun Kyoung, Daejeon 34122 (KR); KIM, Dong Min, Seoul 08787 (KR)
(74) Representative: Goddar, Heinz J.
(86) International application number: PCT/KR2022/010129
(87) International publication number: WO 2023/008783

(56) References cited:
- EP-A1- 1 526 600
- EP-A2- 1 176 658
- EP-A2- 1 176 659
- WO-A1-2021/103435
- WO-A2-2021/074634
- GB-A- 2 577 114
- JP-A- 2005 251 473
- KR-A- 20070 016 431
- KR-A- 20070 016 431
- KR-A- 20120 102 375
- KR-A- 20140 058 177
- KR-B1- 101 365 679
- US-A1- 2004 096 750
- US-A1- 2014 127 575

## Description

### [Technical Field]

The present invention relates to an electrolyte for a lithium-sulfur battery and a lithium-sulfur battery comprising the same.

### [Background Art]

As the application range of lithium secondary batteries is expanded to not only portable electronic devices and communication devices, but also electric vehicles (EV) and electric storage systems (ESS), demands for high capacity of lithium secondary batteries used as a power source thereof have increased.

Among various lithium secondary batteries, the lithium-sulfur battery is a battery system that uses a sulfur-based material containing a sulfur-sulfur bond as a positive electrode active material, and uses lithium metal, a carbon-based material in which lithium ions are intercalated/deintercalated, or silicon or tin forming an alloy with lithium as a negative electrode active material.

Sulfur, which is a main material of a positive electrode active material in a lithium-sulfur battery, has advantages that it has a low atomic weight, is very rich in resources and thus easy to supply and receive and is cheap, is not toxic, and is environmentally friendly.

In addition, the lithium-sulfur battery has a theoretical discharging capacity of up to 1,672 mAh/g, which is obtained from the conversion reaction of lithium ions and sulfur (S₈+16Li⁺+16e⁻ → 8Li₂S) in the positive electrode, and when using lithium metal (theoretical discharging capacity: 3,860 mAh/g) as a negative electrode, exhibits a theoretical energy density of 2,600 Wh/kg. Since this is a very high numerical value compared to the theoretical energy density of other battery systems (Ni-MH battery: 450 Wh/kg, Li-FeS battery: 480 Wh/kg, Li-MnO₂ battery: 1,000 Wh/kg, Na-S battery: 800 Wh/kg) and a lithium-ion battery (250 Wh/kg) currently being studied, the lithium-sulfur battery is attracting attention as a high-capacity, eco-friendly, and low-cost lithium secondary battery among secondary batteries being developed so far, and various studies thereon are being made as a next-generation battery system.

In the case of the lithium-sulfur battery, at the time of discharging, lithium metal releases electrons at the negative electrode, and is oxidized to the form of lithium cations, and sulfur accepts electrons at the positive electrode and is reduced to the form of sulfur anions. Specifically, sulfur, which is a positive electrode active material, is finally reduced to lithium sulfide (Li₂S) through lithium polysulfide (Li₂Sₓ, x = 8, 6, 4, 2).

Sulfur used as a positive electrode active material in the lithium-sulfur battery has low electrical conductivity, and thus it is difficult to secure reactivity with electrons and lithium ions in a solid phase form. Therefore, in order to improve the reactivity of sulfur, a liquid-phase reaction is induced through lithium polysulfide, which is an intermediate product generated during the discharging process of the lithium-sulfur battery, and for this purpose, an ether-based compound with high solubility in lithium polysulfide is mainly used as a solvent for the electrolyte.

However, when an ether-based compound is used as a solvent for the electrolyte, due to the leaching of lithium polysulfide from the positive electrode and its shuttle phenomenon, as cycles are proceeded, the degradation of capacity and cycle life characteristics of the battery is accelerated, and in actual operation, there is a problem in that all of the theoretical discharging capacity and theoretical energy density is not realized because the overvoltage following the electrochemical reaction up to the final product is large.

Accordingly, in order to solve the problem of leaching of lithium polysulfide, various methods such as reforming the positive electrode active material or minimizing the content of electrolyte are being studied.

For example, Korean Patent Publication No. 2016-0037084 discloses that it is possible to block lithium polysulfide from dissolving and flowing out and improve the electrical conductivity of the sulfur-carbon nanotube composite by using the carbon nanotube aggregate of the three-dimensional structure coated with graphene as the carbon material.

In addition, Korean Patent No. 1379716 discloses that by using the graphene composite containing sulfur as a positive electrode active material, which is prepared through a method of treating graphene with hydrofluoric acid to form pores on the surface of graphene, and growing sulfur particles in the pores, it is possible to suppress the leaching of lithium polysulfide, thereby minimizing the decrease in the capacity of the battery.

These prior arts have a problem that although the leaching of lithium polysulfide was prevented by changing the structure or material of the sulfur-carbon composite used as the positive electrode active material, the effect is not sufficient and it is difficult to use commercially. In addition, there is a problem that due to the characteristics of the ether-based solvent included in the electrolyte, the lower the electrolyte content in the lithium-sulfur battery, the faster the viscosity increases during charging/discharging, and thus an overvoltage occurs, which can be easily degraded. Therefore, there is still a need to develop a lithium-sulfur battery capable of suppressing leaching of lithium polysulfide to realize excellent performance and operational stability.

### [Prior Art Document]

### [Patent Document]

Korean Patent Publication No. 2016-0037084 (April 5, 2016), SURFUR-CARBONNANOTUBE COMPOSITE, METHOD OF PREPARING THE SAME, CATHODE ACTIVE MATERIAL FOR LITHIUM-SULFUR BATTERY INCLUDING THE SAME AND LITHIUM-SULFUR BATTERY INCLUDING THE SAME

Korean Patent No.1379716 (March 25, 2014), LITHIUM-SULFUR SECONDARY BATTERY HAVING ELECTRODE WHICH IS CONSTRUCTED WITH GRAPHENE COMPOSITE INCLUDING SULFUR AND A FORMING METHOD THEREOF

KR 2007 0 016 431 A provides a lithium secondary battery active material having a surface treatment layer containing inorganic fine particles and a conductive polymer having a nano-size.

WO 2021/103 435 A1 relates to a lithium metal battery electrolyte containing an aromatic compound as a diluent. The electrolyte contains a lithium salt, a solvent for dissolving the lithium salt, and a diluent; the diluent is an aromatic compound, and the diluent is used for inhibiting lithium dendrites generated due to uneven deposition of a lithium metal negative electrode in the lithium metal battery in a cycle process, and is used for inhibiting the lithium metal negative electrode in the lithium metal battery from reacting with the electrolyte.

WO 2021/074634 A2 discloses an electrochemical cell comprising an anode comprising an alkali metal or alkali metal alloy or silicon; a cathode comprising a particulate mixture deposited on a current collector, said particulate mixture comprising electrochemically active sulfur material and electronically conductive carbon material, wherein the porosity of the cathode is less than 40%; and an electrolyte having a polysulfide solubility of less than 500 mM.

GB 2 577 114 A relates to an electrochemical cell comprising an anode comprising lithium or sodium metal or metal alloy; an ionically conductive cathode comprising an electroactive sulfur material; and a liquid electrolyte comprising at least one lithium salt or at least one sodium salt, wherein the concentration of the at least one lithium salt or sodium salt in the electrolyte is at least 75% of the saturation concentration of the electrolyte. The cell may be a lithium-sulfur cell.

EP 1 526 600 A1 relates to an organic electrolytic solution comprising a halogenated benzene compound, such as 1-iodobenzene or 1-chlorobenzene.

US 2004/096750 A1 describes a non-aqueous electrolytic solution and a lithium battery employing the same. The non-aqueous electrolyte solution that contains a substituted or unsubstituted acetate can effectively stabilize lithium metal and improve the conductivity of lithium ions.

EP 1 176 659 A2 relates to an electrolyte for a lithium-sulfur battery having a solvent having a dielectric constant that is greater than or equal to 20, a solvent having a viscosity that is less than or equal to 1.3, and an electrolyte salt.

EP 1 176 658 A2 discloses an electrolyte for a lithium-sulfur battery that includes a first component solvent with a sulfur solubility more than or equal to 20 mM, a second component solvent with a sulfur solubility less than 20 mM, a third component solvent with a high dielectric constant and a high viscosity, and an electrolyte salt.

### [Disclosure]

### [Technical Problem]

As a result of conducting various studies to solve the above problem, the inventors of the present invention have confirmed that when the electrolyte for lithium-sulfur battery comprises two specific compounds as a non-aqueous organic solvent, excellent conductivity to lithium ions appears, while the leaching of lithium polysulfide is suppressed, and thus the capacity and cycle life characteristics of the lithium-sulfur battery can be improved, and thus have completed the present invention.

Accordingly, it is an object of the present invention to provide an electrolyte for a lithium-sulfur battery capable of realizing a lithium-sulfur battery with excellent performance and operational stability.

In addition, it is another object of the present invention to provide a lithium-sulfur battery comprising the electrolyte.

### [Technical Solution]

In order to achieve the above objects, the present invention provides an electrolyte for a lithium-sulfur battery comprising a lithium salt and a non-aqueous organic solvent, wherein the non-aqueous organic solvent comprises a first solvent comprising a benzene-based compound and a second solvent comprising 1,3-dioxolane, wherein a volume ratio of the first solvent and the second solvent is 1:0.5 to 1:4.

In one embodiment of the present invention, the benzene-based compound may comprise at least one selected from the group consisting of benzene, 1,4-difluorobenzene, 1,3,5-trifluorobenzene, 1,2,4,5-tetrafluorobenzene and hexafluorobenzene.

In one embodiment of the present invention, the lithium salt may comprise at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂) ₂, LiN(C₂F₅SO₂)₂, LiN(SO₂F)₂, lithium chloroborane, lithium lower aliphatic carboxylic acid having 4 or less carbon atoms, lithium tetraphenyl borate and lithium imide.

In one embodiment of the present invention, a molar ratio of the second solvent and the lithium salt may be 4:1 or more.

In addition, the present invention provides a lithium-sulfur battery comprising the electrolyte for the lithium-sulfur battery.

### [Advantageous Effects]

Since the electrolyte for the lithium-sulfur battery according to the present invention comprises a non-aqueous organic solvent including two specific compounds, the leaching of lithium polysulfide is suppressed, and thus the capacity expression of the positive electrode is maximized, thereby improving the capacity characteristics of the lithium-sulfur battery and securing stable cycle life characteristics.

### [Description of Drawings]

FIG. 1 is a photograph showing whether lithium polysulfide is dissolved into electrolytes prepared in Examples and Comparative Example ((a): Example 1, (b): Example 2, (c): Example 3, (d): Example 4, (e): Example 6, (f): Comparative Example 1).
FIG. 2 is a graph showing the results of evaluating the solubility of lithium polysulfide in the electrolyte according to Example 4.
FIG. 3 is a graph showing the results of evaluating the solubility of lithium polysulfide in the electrolyte according to Comparative Example 1.
FIG. 4 is a graph showing the results of evaluation of the performance of lithium-sulfur batteries according to Examples 1 to 4 and Comparative Example 1.
FIG. 5 is a graph showing the results of evaluation of the coulombic efficiency of lithium-sulfur batteries according to Examples 1 to 4 and Comparative Example 1.
FIG. 6 is a graph showing the results of evaluation of the performance of lithium-sulfur batteries according to Examples 3 and 6 and Comparative Example 1.
FIG. 7 is a graph showing the results of evaluation of the coulombic efficiency of lithium-sulfur batteries according to Examples 3 and 6 and Comparative Example 1.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The singular forms comprise plural referents unless the context clearly dictates otherwise. It is to be understood that the terms such as "comprise" or "have" as used in the present specification are intended to designate the presence of stated features, numbers, steps, operations, components, parts or combinations thereof, but not to preclude the possibility of the presence or addition of one or more other features, numbers, steps, operations, components, parts, or combinations thereof.

The term "composite" as used herein refers to a material that two or more materials are combined to express a more effective function while forming physically and chemically different phases to each other.

The term "polysulfide" as used herein is a concept comprising both "polysulfide ions (Sₓ²⁻, x = 8, 6, 4, 2)" and "lithium polysulfides (Li₂Sₓ or LiSₓ⁻, x = 8, 6, 4, 2)."

The lithium-sulfur battery is spotlighted as a next-generation secondary battery, due to the advantages that not only the theoretical discharge capacity and theoretical energy density are high, but also the sulfur used as the positive electrode active material has low unit cost and abundant reserves, and is environmentally friendly.

However, as described above, lithium polysulfide, which is an intermediate product of the sulfur discharge reaction, diffuses out of the reaction region of the positive electrode through the electrolyte in the form of a neutral molecule or anion because of the high solubility in the electrolyte, specifically the solvent comprised therein, and moves to the negative electrode. As sulfur loss occurs due to leaching of lithium polysulfide, the amount of sulfur participating in the electrochemical reaction at the positive electrode is reduced, and thus it can be realized only up to about 70% of the theoretical discharge capacity, resulting in a decrease in capacity. In addition, the leached lithium polysulfide causes a side reaction with lithium metal, which is a negative electrode, or causes a so-called shuttle phenomenon that moves between the positive electrode and the negative electrode. In these processes, insoluble lithium sulfide is fixed on the surface of the electrode to form a passivation layer, thereby lowering the reactivity of the electrode and increasing the overall resistance of the battery, and thus further deteriorating the capacity and lifetime characteristics of the battery.

For this purpose, when using a method of changing the structure or material of the positive electrode active material or changing the composition or content of the electrolyte from those proposed in the prior art, the dissolution rate of lithium polysulfide into the electrolyte can be slowed, but the problem of leaching of lithium polysulfide could not be fundamentally solved. In addition, due to compatibility problems with other components constituting the lithium-sulfur battery, it is not preferable for practical application because it causes serious problems in the performance and operational stability of the battery or is inefficient in terms of a manufacturing process.

Accordingly, the present invention discloses an electrolyte for a lithium-sulfur battery, wherein the electrolyte used in the lithium-sulfur battery comprises two specific compounds as a non-aqueous organic solvent, thereby suppressing the leaching of lithium polysulfide and thus improving the capacity and cycle life characteristics of the lithium-sulfur battery.

Specifically, the electrolyte for the lithium-sulfur battery according to the present disclosure comprises a lithium salt and a non-aqueous organic solvent, wherein the non-aqueous organic solvent comprises a first solvent comprising a benzene-based compound and a second solvent comprising 1,3-dioxolane, wherein a volume ratio of the first solvent and the second solvent is 1:0.5 to 1:4.

In particular, in the electrolyte for the lithium-sulfur battery according to the present disclosure, since the non-aqueous organic solvent comprises a benzene-based compound as the first solvent, the dissolution of lithium polysulfide into the electrolyte is suppressed, and as 1,3-dioxolane is comprised as the second solvent, the dissolution of the lithium salt can be promoted. Accordingly, since the leaching of lithium polysulfide is suppressed, no problems such as sulfur loss, shuttle phenomenon, and electrode passivation occur, and thus the capacity expression of the positive electrode active material is maximized, thereby realizing a lithium-sulfur battery with excellent capacity, output and cycle life characteristics.

Hereinafter, each of A) the first solvent, B) the second solvent, and C) the lithium salt comprised in the electrolyte for the lithium-sulfur battery according to the present disclosure will be described in detail.

### A) First solvent

The electrolyte for the lithium-sulfur battery according to the present disclosure includes a first solvent including a benzene-based compound.

Since the benzene-based compound comprised as the first solvent exhibits a non-polar characteristic due to its molecular structure, it reduces the solubility of lithium polysulfide in electrolyte to serve to inhibit the leaching of lithium polysulfide.

The benzene-based compound may comprise at least one selected from the group consisting of benzene; and fluorinated benzenes such as flurorobenzene, 1,2-difluorobenzene, 1,4-difluorobenzene, 1,2,3-trifluorobenzene, 1,3,5-trifluorobenzene, 1,2,3,4-tetrafluorobenzene, 1,2,4,5-tetrafluorobenzene, pentaflurorobenzene, hexaflurorobenzene and the like. According to an embodiment of the present invention, the benzene-based compound may be at least one selected from the group consisting of 1,4-difluorobenzene, 1,3,5-trifluorobenzene, 1,2,4,5-tetrafluorobenzene and hexaflurorobenzene, and preferably, may comprise at least one selected from the group consisting of benzene and 1,4-difluorobenzene.

The content of the first solvent comprising such a benzene-based compound may be 20 to 70% by volume, preferably 30 to 70% by volume, and more preferably 50 to 60% by volume, based on the total 100% by volume of the non-aqueous organic solvent (that is, the first solvent + the second solvent) comprised in the electrolyte for the lithium-sulfur battery. When the content of the first solvent is less than the above range, the leaching of lithium polysulfide cannot be suppressed, and thus the intended effect cannot be obtained. On the contrary, when the content of the first solvent exceeds the above range, there is a problem that the electrolyte cannot be prepared.

### B) Second solvent

The electrolyte for the lithium-sulfur battery according to the present disclosure includes a second solvent comprising 1,3-dioxolane (DOL).

The 1,3-dioxolane comprised as the second solvent dissolves the lithium salt so that the electrolyte comprising it has conductivity to lithium ions, and thus the electrochemical reaction can proceed smoothly. Specifically, the 1,3-dioxolane serves as a chelating agent (complexing agent) for lithium ions to dissolve the lithium salt into the non-polar first solvent.

The content of the second solvent comprising the above-mentioned 1,3-dioxolane may be 30 to 80% by volume, preferably 30 to 70% by volume, and more preferably 40 to 50% by volume, based on the total 100% by volume of the non-aqueous organic solvent (that is, the first solvent + the second solvent) contained in the electrolyte for the lithium-sulfur battery. When the content of the second solvent is less than the above range, lithium salt cannot be sufficiently dissolved, and thus there may be a problem in that the conductivity to lithium ions is lowered. On the contrary, when the content of the second solvent exceeds the above range, since the leaching of lithium polysulfide increases, and thus loss of sulfur increases or the shuttle phenomenon becomes more severe, there may be a problem that the capacity and lifetime of the battery are reduced.

In addition, the electrolyte for the lithium-sulfur battery according to the present disclosure comprises the first solvent and the second solvent in a volume ratio of 1:0.5 to 1:4, preferably 1:0.5 to 1:2, and more preferably 1:0.67 to 1:1. In the present invention, the volume ratio corresponds to a ratio of "volume % of the first solvent": "volume % of the second solvent." When the volume ratio of the first solvent and the second solvent falls within the above range, while the effect of inhibiting the leaching of lithium polysulfide is excellent, it can exhibit excellent conductivity to lithium ions. When the volume ratio of the first solvent and the second solvent is less than the above range, there is a problem that the electrolyte is not prepared. On the contrary, when the volume ratio exceeds the above range, the effect of preventing the leaching of lithium polysulfide cannot be ensured.

### C) Lithium salt

The electrolyte for the lithium-sulfur battery according to the present disclosure includes a lithium salt as a salt of the electrolyte used to exhibit conductivity characteristics for lithium ions.

The lithium salt may be used without limitation as long as it can be commonly used in a lithium secondary battery.

For example, the lithium salt may comprise at least one selected from the group consisting of LiCl, LiBr, LiI, LiClO₄ LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂)₂(lithium bis(trifluoromethanesulfonyl)imide; LiTFSI), LiN(C₂F₅SO₂)₂, LiN(SO₂F)₂ (lithium bis(fluorosulfonyl)imide; LiFSI), lithium chloroborane, lithium lower aliphatic carboxylate, lithium tetraphenyl borate, and lithium imide. The lithium salt preferably comprises LiN(CF₃SO₂)₂(LiTFSI)as an essential component.

The concentration of the lithium salt can be appropriately determined in consideration of various factors known in the lithium secondary battery field such as the composition of the electrolyte, the solubility of the lithium salt, the conductivity of the dissolved lithium salt, the charging and discharging conditions of the battery, and the like. For example, the concentration of lithium salt may be 0.2 to 4 M, specifically 0.6 to 2 M, and more specifically 0.7 to 1.7 M. When the concentration of the lithium salt is less than 0.2 M, the conductivity of the electrolyte may be lowered and thus the performance of the electrolyte may be deteriorated. When the concentration of the lithium salt exceeds 4 M, the viscosity of the electrolyte may increase and thus the mobility of the lithium ion may be reduced.

In addition, the electrolyte for the lithium-sulfur battery according to the present disclosure may comprise the second solvent and the lithium salt in a molar ratio of 4:1 or more, preferably 4.5:1 to 8:1, and more preferably 5.5:1 to 7:1. In the present invention, the molar ratio corresponds to the ratio of "the number of moles of the second solvent": "the number of moles of the lithium salt." When the molar ratio of the second solvent and the lithium salt falls within the above-described range, a low overvoltage and excellent capacity characteristics may be exhibited. When the molar ratio of the second solvent and the lithium salt is less than the above range, there may be a problem that the capacity decreases due to an increase in overvoltage. On the contrary, when the molar ratio exceeds the above range, there may be a problem that the leaching of lithium polysulfide occurs.

The electrolyte for the lithium-sulfur battery according to the present disclosure may further include nitric acid or nitrous acid-based compounds in addition to the above-described components. The nitric acid or nitrous acid-based compounds have an effect of forming a stable film on the negative electrode and improving the charging/discharging efficiency.

For example, the nitric acid or nitrous acid-based compounds may be at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and the combinations thereof. Preferably, lithium nitrate may be used.

The content of the nitric acid or nitrous acid-based compounds may be 1 to 10% by weight, preferably 2 to 8% by weight, and more preferably 2.5 to 6% by weight, based on the total 100% by weight of the electrolyte for the lithium-sulfur battery. When the nitric acid or nitrous acid-based compounds are included below the above range, the coulombic efficiency may be rapidly lowered. On the contrary, when the nitric acid or nitrous acid-based compounds exceed the above range, the viscosity of the electrolyte may increase, and thus it may be difficult to operate the battery.

In addition, the electrolyte for the lithium-sulfur battery according to the present disclosure may further comprise other additives for the purpose of improving charging/discharging characteristics, flame retardancy, and the like. Examples of the additives may comprise pyridine, triethylphosphite, triethanolamine, cyclic ether, ethylene diamine, n-glyme, hexaphosphoric triamide, nitrobenzene derivatives, sulfur, quinoneimine dyes, N-substituted oxazolidinone, N,N-substituted imidazolidine, ethylene glycol dialkyl ether, ammonium salt, pyrrole, 2-methoxy ethanol, aluminum trichloride, fluoroethylene carbonate (FEC), propen sultone (PRS), vinylene carbonate (VC) and the like.

In addition, the present invention discloses a lithium-sulfur battery containing the electrolyte for the lithium-sulfur battery.

The lithium-sulfur battery according to the present disclosure comprises a positive electrode, a negative electrode, and an electrolyte interposed therebetween, wherein the electrolyte includes the electrolyte for the lithium-sulfur battery according to the present disclosure.

The positive electrode may comprise a positive electrode current collector and a positive electrode active material layer applied to one or both surfaces of the positive electrode current collector.

The positive electrode current collector is for supporting the positive electrode active material, and is not particularly limited as long as it has high electrical conductivity without causing chemical changes in the battery. For example, copper, stainless steel, aluminum, nickel, titanium, palladium, sintered carbon; copper or stainless steel whose surface is treated with carbon, nickel, silver or the like; aluminum-cadmium alloy or the like may be used.

The positive electrode current collector can have fine irregularities formed on its surface to enhance the bonding force with the positive electrode active material, and may be formed in various forms such as film, sheet, foil, mesh, net, porous body, foam, nonwoven fabric or the like.

The positive electrode active material layer may comprise a positive electrode active material and may further comprise a conductive material, a binder, an additive and the like.

The positive electrode active material comprise sulfur, and specifically may comprise at least one selected from the group consisting of elemental sulfur (S₈) and sulfur compounds. The positive electrode active material may comprise at least one selected from the group consisting of inorganic sulfur, Li₂Sₙ(n≥1), a disulfide compound, an organic sulfur compound and a carbon-sulfur polymer ((C₂Sₓ)ₙ, x=2.5 to 50, n≥2). Preferably, the positive electrode active material may be inorganic sulfur.

Sulfur is used in combination with an electrically conductive material such as a carbon material because it does not have electrical conductivity alone. Accordingly, the sulfur is included in the form of a sulfur-carbon composite, and preferably, the positive electrode active material may be a sulfur-carbon composite.

The carbon comprised in the sulfur-carbon composite is a porous carbon material and provides a framework capable of uniformly and stably immobilizing sulfur, and supplements the low electrical conductivity of sulfur to enable the electrochemical reaction to proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porous carbon material. When the average diameter of the pores is less than the above range, the pore size is only at the molecular level and impregnation with sulfur is impossible. On the contrary, when the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); mesoporous carbon; graphite such as natural graphite, artificial graphite, and expanded graphite; and activated carbon. Preferably, the porous carbon material may be carbon nanotubes.

The sulfur-carbon composite may comprise 60 to 90 parts by weight, preferably 65 to 85 parts by weight, and more preferably 70 to 80 parts by weight of sulfur, based on total 100 parts by weight of the sulfur-carbon composite. When the content of sulfur is less than the above range, as the content of the porous carbon material in the sulfur-carbon composite is relatively increased, the specific surface area is increased, so that the content of the binder is increased during the manufacture of the positive electrode. The increase in the amount of the binder used may eventually increase the sheet resistance of the positive electrode and acts as an insulator to prevent electron pass, thereby deteriorating the performance of the battery. On the contrary, when the content of sulfur exceeds the above range, sulfur that is not bound to the porous carbon material agglomerates with each other or is re-leached to the surface of the porous carbon material, and thus becomes difficult to receive electrons and thus cannot participate in electrochemical reactions, resulting in loss of the capacity of the battery.

In addition, sulfur in the sulfur-carbon composite is located on at least one of the inner and outer surfaces of the aforementioned porous carbon material, and at this time, may be present in an area of less than 100%, preferably 1 to 95%, and more preferably 60 to 90% of the entire inner and outer surfaces of the porous carbon material. When sulfur is present on the inner and outer surfaces of the porous carbon material within the above range, it can show the greatest effect in terms of the electron transfer area and the wettability with the electrolyte. Specifically, since sulfur is thinly and evenly impregnated on the inner and outer surfaces of the porous carbon material in the above range, the electron transfer contact area may be increased during the charging/discharging process. When the sulfur is located in the area of 100% of the entire inner and outer surface of the porous carbon material, since the carbon material is completely covered with sulfur, wettability to the electrolyte is deteriorated and contact with conductive materials included in the electrode is reduced, so that the sulfur cannot receive electrons and thus cannot participate in the electrochemical reaction.

The method for preparing the sulfur-carbon composite is not particularly limited in the present invention, and a method commonly used in the art may be used. For example, a method of simply mixing sulfur and the porous carbon material and then heat-treating them to form a composite may be used.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group IIIA element may comprise Al, Ga, In, Tl and the like, and the group IVA element may comprise Ge, Sn, Pb, and the like.

The positive electrode active material may be comprised in an amount of 40 to 95% by weight, preferably 45 to 90% by weight, and more preferably 60 to 90% by weight based on the total 100% by weight of the positive electrode active material layer. When the content of the positive electrode active material is less than the above range, it is difficult for the positive electrode to sufficiently exert an electrochemical reaction. On the contrary, when the content exceeds the above range, there is a problem that the resistance of the positive electrode is increased and the physical properties of the positive electrode are lowered due to a relatively insufficient content of a conductive material and a binder to be described later.

The positive electrode active material layer may optionally further comprise a conductive material, which allows electrons to move smoothly within the positive electrode (specifically, positive electrode active material) and a binder for well attaching the positive electrode active material to the current collector.

The conductive material is a material that serves as a path, through which electrons are transferred from the current collector to the positive electrode active material, by electrically connecting the electrolyte and the positive electrode active material, and the conductive material may be used without limitation as long as it has electrical conductivity.

For example, as the conductive material, graphite such as natural graphite or artificial graphite; carbon blacks such as Super **P,** Denka black, acetylene black, Ketjen black, channel black, furnace black, lamp black, and thermal black; carbon derivatives such as carbon nanotubes and fullerene; electrically conductive fibers such as carbon fiber and metal fiber; carbon fluoride; metal powders such as aluminum and nickel powder or electrically conductive polymers such as polyaniline, polythiophene, polyacetylene, and polypyrrole may be used alone or in combination.

The conductive material may be included in an amount of 1 to 10% by weight, preferably 4 to 7% by weight, based on the total 100% by weight of the positive electrode active material layer. When the content of the electrically conductive material is less than the above range, since electron transfer between the positive electrode active material and the current collector is not easy, voltage and capacity are reduced. On the contrary, when the content exceeds the above range, the proportion of the positive electrode active material is relatively reduced, so that the total energy (charge) of the battery can be reduced. Therefore, it is desirable to determine an appropriate content within the above-described range.

The binder maintains the positive electrode active material in the positive electrode current collector and organically connects the positive electrode active materials to further increase the binding force therebetween, and any binder known in the art can be used as the binder.

For example, the binder may be any one selected from the group consisting of fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styreneisoprene rubber; cellulose-based binders comprising carboxy methyl cellulose (CMC), starch, hydroxypropyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The content of the binder may be 1 to 10% by weight based on the total 100% by weight of the positive electrode active material layer. When the content of the binder is less than the above range, the physical properties of the positive electrode may be deteriorated and thus positive electrode active material and the electrically conductive material can be broken away. When the content of the binder exceeds the above range, the ratio of the active material and the electrically conductive material in the positive electrode is relatively reduced and thus the battery capacity can be reduced. Therefore, it is preferable to determine an appropriate amount of the binder within the above-described range.

In the present invention, the method of manufacturing the positive electrode is not particularly limited, and a method known to a person skilled in the art or various methods modified therefrom may be used.

As an example, the positive electrode may be prepared by preparing a slurry composition for a positive electrode comprising the above-described components, and then applying it to at least one surface of the positive electrode current collector.

The slurry composition for a positive electrode comprises the positive electrode active material, a conductive material, and a binder as described above, and may further comprise a solvent other than the above.

As the solvent, one capable of uniformly dispersing a positive electrode active material, a conductive material, and a binder is used. Such a solvent is an aqueous solvent, and water is most preferred, and in this case, water may be distilled water or de-ionized water. However, it is not necessarily limited thereto, and if necessary, a lower alcohol that can be easily mixed with water may be used. As the lower alcohol methanol, ethanol, propanol, isopropanol, and butanol are included, and preferably, they may be used in combination with water.

The content of the solvent may be contained at a level having a concentration that allows easy coating, and the specific content varies depending on the application method and apparatus.

The slurry composition for a positive electrode may additionally comprise, if necessary, materials commonly used for the purpose of improving its function in the relevant technical field as necessary. For example, a viscosity modifier, a fluidizing agent, a filler, etc. are included.

The method of applying the positive electrode slurry composition is not particularly limited in the present invention, and for example, methods such as a doctor blade method, a die casting method, a comma coating method, and a screen-printing method can be used. In addition, after being molded on a separate substrate, the slurry for the positive electrode may be applied on the positive electrode current collector by a pressing or lamination method.

After the application, a drying process for removing the solvent may be performed. The drying process is performed at a temperature and time at a level capable of sufficiently removing the solvent, and the conditions may vary depending on the type of the solvent, and thus are not particularly limited in the present invention. As an example, the drying method may be a drying method by warm air, hot air, or low-humidity air, a vacuum drying method, and a drying method by irradiation with (far)-infrared radiation or electron beam. The drying rate is usually adjusted so that the solvent can be removed as quickly as possible within a speed range that does not cause cracks in the positive electrode active material layer due to the concentration of stress and does not delaminate the positive electrode active material layer from the positive electrode current collector.

Additionally, the density of the positive electrode active material in the positive electrode may be increased by pressing the current collector after drying. In this case, methods, such as a mold press and a roll press, are mentioned as a press method.

The porosity of the positive electrode, specifically, the positive electrode active material layer prepared by the above-described composition and manufacturing method may be 40 to 80%, preferably 60 to 75%. When the porosity of the positive electrode is less than 40%, since the degree of filling of the slurry composition for the positive electrode comprising a positive electrode active material, an electrically conductive material, and a binder becomes too high, there are problems that sufficient electrolyte to exhibit ion conduction and/or electrical conduction between positive electrode active materials cannot be maintained, and thus output characteristics or cycle characteristics of the battery may be deteriorated, the overvoltage and the reduction in discharging capacity become serious. On the contrary, when the porosity of the positive electrode exceeds 80% and has an excessively high porosity, there is a problem that the physical and electrical connection with the current collector is lowered and thus adhesion is lowered and the reaction becomes difficult, and there is a problem that the increased porosity is filled by the electrolyte and thus the energy density of the battery is lowered. Therefore, the porosity of the positive electrode is appropriately adjusted within the above range.

The negative electrode may comprise a negative electrode current collector and a negative electrode active material layer applied to one or both surfaces of the negative electrode current collector. Alternatively, the negative electrode may be a lithium metal plate.

The negative electrode current collector is for supporting the negative electrode active material layer, and is as described in the positive electrode current collector.

The negative electrode active material layer may comprise a conductive material, a binder, etc. in addition to the negative electrode active material. At this time, the conductive material and the binder are as described above.

The negative electrode active material may comprise a material capable of reversibly intercalating or deintercalating lithium ion (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with the lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

The method of forming the negative electrode active material is not particularly limited, and may include a method of forming a layer or film commonly used in the art. For example, methods such as compression, coating, or deposition can be used. In addition, a metal lithium thin film formed on a metal plate by initial charging after assembling the battery without the lithium thin film in the current collector is also comprised in the negative electrode of the present invention.

The electrolyte is for causing an electrochemical oxidation or reduction reaction between the positive electrode and the negative electrode through this, and is as described above.

The injection of the electrolyte may be performed at an appropriate stage of the manufacturing processes of the lithium-sulfur battery, depending on the manufacturing process and required physical properties of the final product. That is, the injection of the electrolyte can be performed before assembling the lithium-sulfur battery or at the final stage of assembling the lithium-sulfur battery.

A separator may be additionally comprised between the positive electrode and the negative electrode.

The separator may be made of a porous non-conductive or insulating material that separates or insulates the positive electrode and the negative electrode from each other and enables transport of lithium ions between the positive electrode and the negative electrode. The separator may be used without special limitation as long as it is used as a separator in a conventional lithium-sulfur battery. The separator may be an independent member such as a film, or may comprise a coating layer added to the positive electrode and/or negative electrode.

It is preferable that the separator has excellent wettability to the electrolyte while having low resistance to ion migration of the electrolyte.

The separator may be made of a porous substrate, and the porous substrate may be used as long as it is a porous substrate commonly used for a lithium-sulfur battery, and porous polymer films may be used alone or by laminating them, and for example, a nonwoven fabric or a polyolefin-based porous membrane made of glass fibers, polyethylene terephthalate fibers, etc. having a high melting point may be used, but is not limited thereto.

The material of the porous substrate is not particularly limited in the present invention, and any material can be used as long as it is a porous substrate commonly used in a lithium-sulfur battery. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 *µ*m, preferably 5 to 50 *µ*m. Although the thickness range of the porous substrate is not particularly limited to the above-mentioned range, when the thickness is excessively thinner than the lower limit described above, mechanical properties are deteriorated and thus the separator may be easily damaged during the use of the battery.

The average diameter and porosity of the pores present in the porous substrate are also not particularly limited, but may be 0.001 to 50 *µ*m and 10 to 95%, respectively.

The lithium-sulfur battery of the present disclosure can be classified into cylindrical, rectangular, coin-shaped, pouch type and the like depending on the type, and can be divided into bulk type and thin film type depending on the size. The structure and preparation method of these batteries are well known in the art, and thus detailed description thereof is omitted.

In addition, the present invention discloses a battery module comprising the lithium-sulfur battery described above as a unit battery.

The battery module may be used as a power source for medium- to large-sized devices requiring high temperature stability, long cycle characteristics, high-capacity characteristics, and the like.

Examples of the medium- to large-sized devices may comprise, but are not limited to, a power tool that is powered by a battery powered motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (E-scooter); an electric golf cart; and a power storage system.

### [Mode for Invention]

Hereinafter, preferred examples of the present invention will be described in order to facilitate understanding of the present invention.

### Example and Comparative Example

### [Example 1]

### (1) Preparation of electrolyte

In a non-aqueous organic solvent obtained by mixing 1,4-difluorobenzene (first solvent) and 1,3-dioxolane (second solvent) in a volume ratio of 1:4, LiN(CF₃SO₂)₂(LiTFSI) was dissolved to 1 M, and then, stirred at 400 rpm or more for 12 hours or more to prepare an electrolyte (second solvent: lithium salt = 11.4:1 (molar ratio)).

### (2) Manufacture of lithium-sulfur battery

Sulfur and mesoporous carbon (CMK-3, Advanced Chemical Supplier) were evenly mixed using a ball mill in a weight ratio of 60:40, and then were heat-treated at 155 °C for 12 hours and at 200 °C for 2 hours to prepare a sulfur-carbon composite.

80% by weight of the sulfur-carbon composite thus prepared, 10% by weight of Super-P as an electrically conductive material and 10% by weight of polyvinylidene fluoride as a binder were mixed to prepare a slurry composition for a positive electrode.

The slurry composition for the positive electrode thus prepared was applied to a thickness of 30 *µ*m on an aluminum foil having a thickness of 20 *µ*m, and then dried at 60°C for 12 hours to manufacture a positive electrode.

The prepared positive electrode and the lithium metal negative electrode having a thickness of 700 *µ*m were positioned to face each other, and then, a separator was interposed between them, and 20 *µ*ℓ of the electrolyte prepared in (1) above was injected to manufacture a coin cell type lithium-sulfur battery.

Herein, polyethylene having a thickness of 20 *µ*m and a porosity of 45% was used as a separator at 19 phi, and the positive electrode was punched out as a circular electrode of 14 phi and the negative electrode was punched out as a circular electrode of 16 phi to be used.

### [Example 2]

An electrolyte (second solvent: lithium salt = 9.5:1 (molar ratio)) and a lithium-sulfur battery were prepared in the same manner as in Example 1, except that when preparing the electrolyte, the volume ratio of 1,4-difluorobenzene (first solvent) and 1,3-dioxolane (second solvent) contained in the non-aqueous organic solvent is changed to 1:2.

### [Example 3]

An electrolyte (second solvent: lithium salt = 7.2:1 (molar ratio)) and a lithium-sulfur battery were prepared in the same manner as in Example 1, except that when preparing the electrolyte, the volume ratio of 1,4-difluorobenzene (first solvent) and 1,3-dioxolane (second solvent) contained in the non-aqueous organic solvent is changed to 1:1.

### [Example 4]

An electrolyte (second solvent: lithium salt = 4.8:1 (molar ratio)) and a lithium-sulfur battery were prepared in the same manner as in Example 1, except that when preparing the electrolyte, the volume ratio of 1,4-difluorobenzene (first solvent) and 1,3-dioxolane (second solvent) contained in the non-aqueous organic solvent is changed to 2:1.

### [Reference Example 5]

An electrolyte (second solvent: lithium salt = 3.6:1 (molar ratio)) was prepared in the same manner as in Example 1, except that when preparing the electrolyte, the volume ratio of 1,4-difluorobenzene (first solvent) and 1,3-dioxolane (second solvent) contained in the non-aqueous organic solvent is changed to 3:1. However, it was impossible to prepare it in the state of a homogeneous solution, and thus it was impossible to apply it to a battery.

### [Example 6]

An electrolyte (second solvent: lithium salt = 7.2:1 (molar ratio)) and a lithium-sulfur battery were prepared in the same manner as in Example 1, except that when preparing the electrolyte, the volume ratio of benzene (first solvent) and 1,3-dioxolane (second solvent) contained in the non-aqueous organic solvent is changed to 1:1.

### [Comparative Example 1]

A lithium-sulfur battery was prepared in the same manner as in Example 1, except that a mixed solution obtained by dissolving 1 M LiN(CF₃SO₂)₂(LiTFSI) and 0.1 M lithium nitrate (LiNO₃) in an organic solvent obtained by mixing 1,3-dioxolane and 1,2-dimethoxyethane in a volume ratio of 1:1 is used as an electrolyte.

### Experimental Example 1. Evaluation of physical property of electrolyte

### (1) Dissolution property of lithium polysulfide

Dissolution properties of lithium polysulfide in electrolytes prepared in Examples and Comparative Example were evaluated.

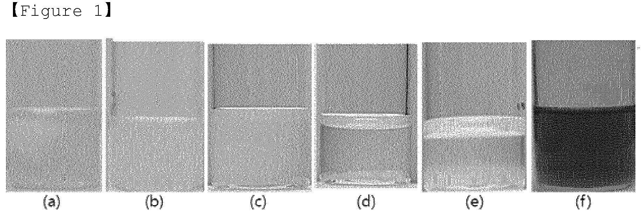

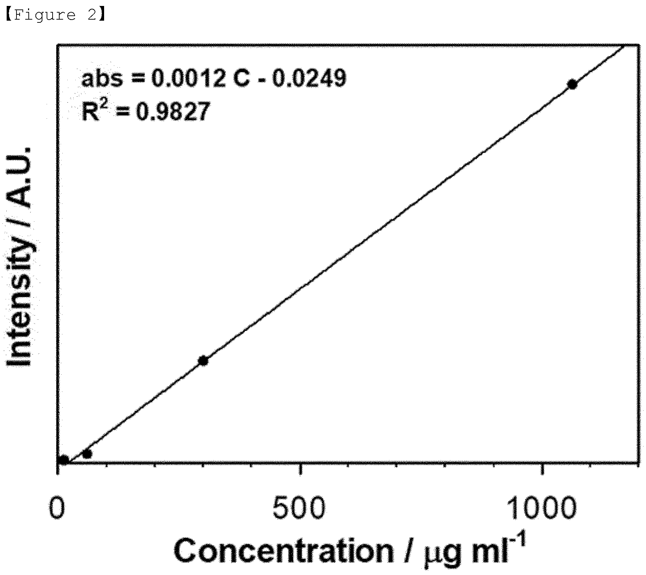

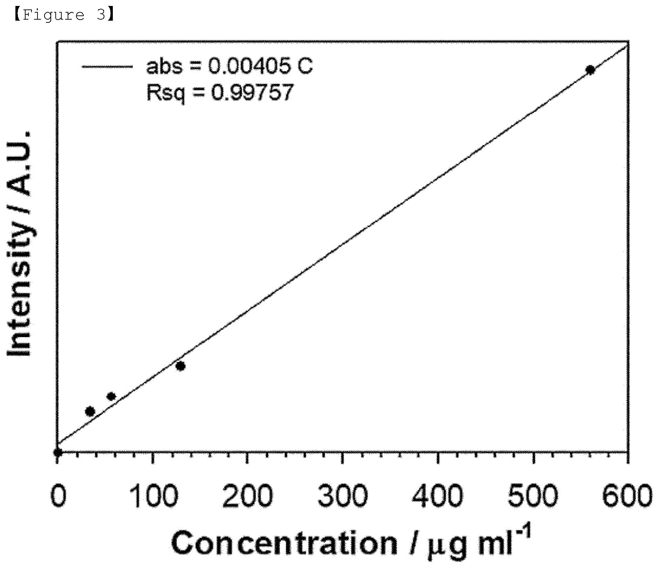

Specifically, an excess of potassium sulfide (K₂S) was added to the electrolytes prepared in the Examples and the Comparative Example at room temperature (25°C), and the solution was equilibrated for 12 hours to prepare a saturated potassium sulfide solution. To the electrolytes prepared in the Examples and the Comparative Example, potassium sulfide was added at a specific concentration and then, stirred to prepare an electrolyte solution with a specified concentration, and at this time, dissolution of lithium polysulfide was visually confirmed. In addition, the solubility of lithium polysulfide was measured using a UV-Vis spectrophotometer for the potassium sulfide saturated solution and the electrolyte solution of which the concentration was specified. In this case, as a UV-Vis spectrophotometer, Agilent 8453 from Agilent company was used. The results obtained at this time are shown in Table 1 and FIGs. 1 to 3.

### (2) Ionic conductivity

For the electrolytes of the Examples and the Comparative Example, ionic conductivity was measured using an ion conductivity meter (Model name: Eutech CON 150, Manufacturer: Eutech Instruments). The results obtained at this time are shown in Table 1.

**Table 1:**

| | Solubility of lithium polysulfide (mg/ml) | Ionic conductivity (mS/cm) |
|---|---|---|
| Example 1 | 30.87 | 15.98 |
| Example 2 | 21.49 | 12.01 |
| Example 3 | 1.025 | 3.07 |
| Example 4 | 0.932 | 3.75 |
| Reference Example 5 | 0.652 | 3.67 |
| Example 6 | 1.664 | 5.06 |
| Comparative Example 1 | 32.3 | 11.4 |

As shown in Table 1 and FIGs. 1 to 3, it can be seen that the electrolytes according to Examples had significantly low solubility for lithium polysulfide as compared to electrolyte according to Comparative Example.

In addition, it can be seen that in the case of electrolytes according to Examples, despite the inclusion of the first solvent that does not dissolve the lithium salt, it exhibited sufficient ionic conductivity for use as an electrolyte.

### Experimental Example 2. Evaluation of performance of battery

For the batteries manufactured in Examples and Comparative Example, the performance was evaluated using a charging/discharging measuring device (LAND CT-2001A, manufactured by Wuhan company).

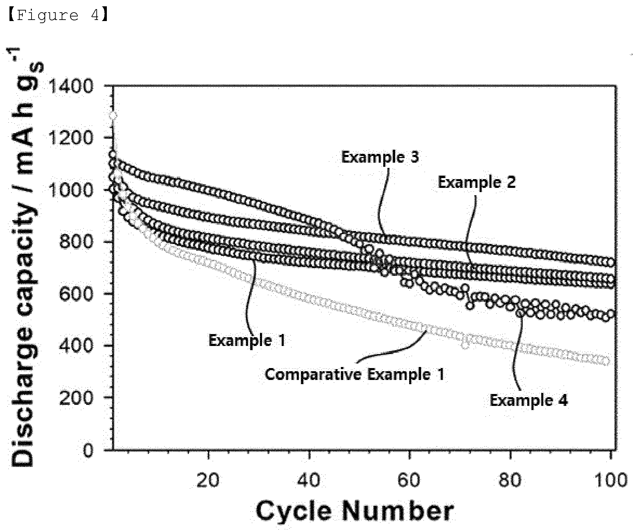

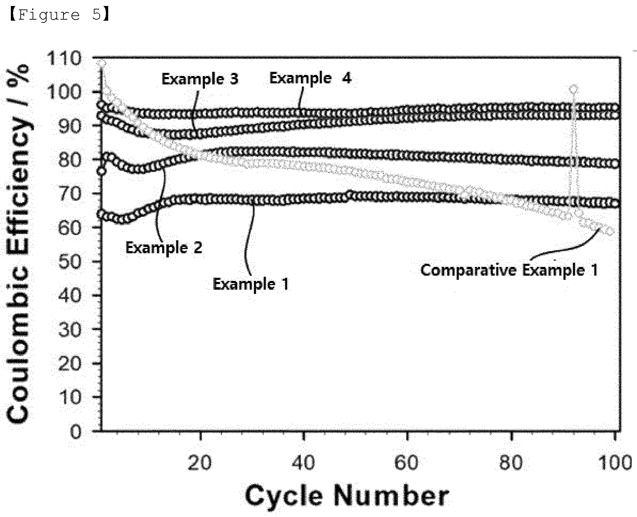

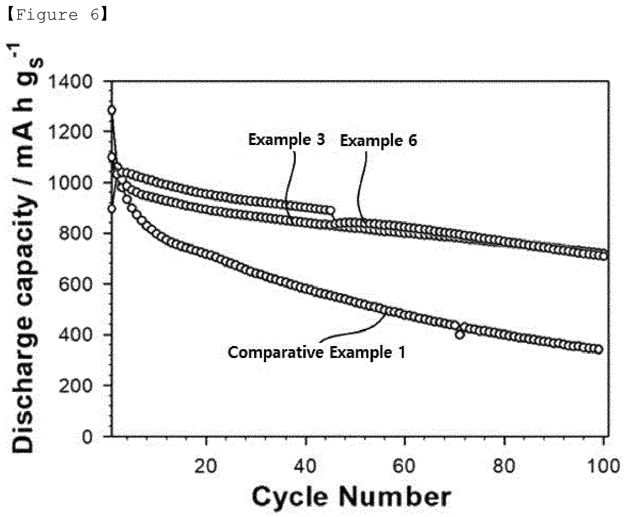

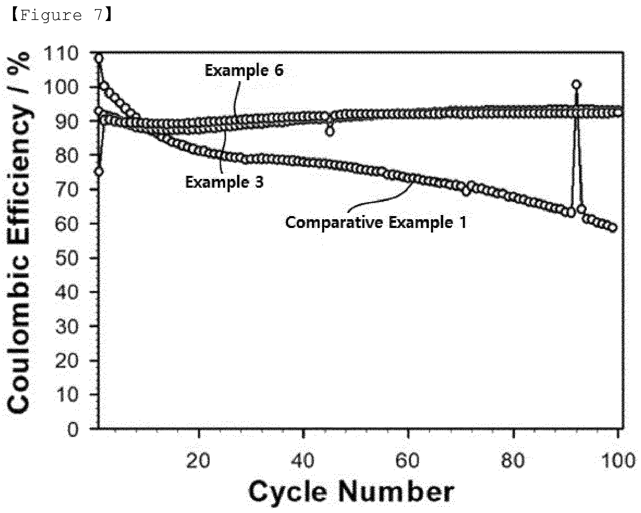

Specifically, the charging/discharging experiment was conducted at 30°C and in a voltage range of 1.5 to 3.0 V, and the cycles were repeated at a C-rate according to the theoretical discharging capacity of sulfur (1,672 mAh/g). The results obtained at this time are shown in Table 2 and FIGs. 4 to 7.

**Table 2:**

| | Discharging capacity per unit weight of positive electrode active material (mAh/g_{sulfur}) | | Capacity retention rate at 100 cycles (%, based on discharging capacity at 3 cycles) |
|---|---|---|---|
| | 1 cycle | 3 cycles | |
| Example 1 | 1002 | 916 | 69.5 |
| Example 2 | 1048 | 972 | 67.5 |
| Example 3 | 1098 | 1008 | 71.3 |
| Example 4 | 1135 | 1089 | 47.8 |
| Example 6 | 896 | 1038 | 68.2 |
| Comparative Example 1 | 1283 | 981 | 34.7 |

From FIGs. 4 to 7 and Table 2, it can be seen that in the case of the batteries according to Examples, the capacity and cycle life characteristics were excellent.

Specifically, referring to FIGs. 4 to 7 and Table 2, it can be seen that in the case of the battery according to Comparative Example, the discharging capacity was lower than that of Examples, and the degeneration was rapidly proceeded due to the decrease in the coulombic efficiency. Meanwhile, it can be seen that in the case of the batteries according to Examples, they not only exhibit high discharging capacity as compared to that of Comparative Example, but also maintain a constant coulombic efficiency and operate stably, thereby improving discharging capacity and cycle life of the batteries.

## Claims

1. An electrolyte for a lithium-sulfur battery comprising a lithium salt and a non-aqueous organic solvent,
wherein the non-aqueous organic solvent includes a first solvent comprising a benzene-based compound and a second solvent comprising 1,3-dioxolane,
wherein a volume ratio of the first solvent and the second solvent is 1:0.5 to 1:4.

2. The electrolyte for the lithium-sulfur battery according to claim 1, wherein the benzene-based compound comprises at least one selected from the group consisting of benzene, 1,4-difluorobenzene, 1,3,5-trifluorobenzene, 1,2,4,5-tetrafluorobenzene and hexafluorobenzene.

3. The electrolyte for the lithium-sulfur battery according to claim 2, wherein the benzene-based compound comprises benzene.

4. The electrolyte for the lithium-sulfur battery according to claim 2, wherein the benzene-based compound comprises 1,4-difluorobenzene.

5. The electrolyte for the lithium-sulfur battery according to claim 1, wherein the lithium salt comprises at least one selected from the group consisting of LiCl, LiBr, LiI, LiClO₄ LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, lithium chloroborane, lithium lower aliphatic carboxylic acid having 4 or less carbon atoms, lithium tetraphenyl borate and lithium imide.

6. The electrolyte for the lithium-sulfur battery according to claim 1, wherein a molar ratio of the second solvent and the lithium salt is 4:1 or more.

7. The electrolyte for the lithium-sulfur battery according to claim 1, wherein the molar ratio of the second solvent and the lithium salt is 4.5:1 to 8:1.

8. A lithium-sulfur battery comprising a positive electrode comprising a positive electrode active material; a negative electrode comprising a negative electrode active material; and the electrolyte according to claim 1.

9. The lithium-sulfur battery according to claim 8, wherein the positive electrode active material comprises at least one selected from the group consisting of elemental sulfur and sulfur compounds.

10. The lithium-sulfur battery according to claim 8, wherein the positive electrode active material comprises at least one selected from the group consisting of inorganic sulfur, Li₂Sₙ(n≥1), a disulfide compound, an organic sulfur compound and a carbon-sulfur polymer ((C₂Sₓ)ₙ, x=2.5 to 50, n≥2).

11. The lithium-sulfur battery according to claim 8, wherein the negative electrode active material comprises at least one selected from the group consisting of lithium metal and lithium alloy.

## Patentansprüche

1. Elektrolyt für eine Lithium-Schwefel-Batterie, umfassend ein Lithiumsalz und ein nichtwässriges organisches Lösungsmittel,
wobei das nichtwässrige organische Lösungsmittel ein erstes Lösungsmittel, umfassend eine Verbindung auf Basis von Benzol, und ein zweites Lösungsmittel, umfassend 1,3-Dioxolan, einschließt,
wobei ein Volumenverhältnis des ersten Lösungsmittels und des zweiten Lösungsmittels 1:0,5 bis 1:4 beträgt.

2. Elektrolyt für die Lithium-Schwefel-Batterie gemäß Anspruch 1, bei der die Verbindung auf Basis von Benzol mindestens eine, ausgewählt aus der Gruppe, bestehend aus Benzol, 1,4-Difluorbenzol, 1,3,5-Trifluorbenzol, 1,2,4,5-Tetrafluorbenzol und Hexafluorbenzol, umfasst.

3. Elektrolyt für die Lithium-Schwefel-Batterie gemäß Anspruch 2, bei der die Verbindung auf Basis von Benzol Benzol umfasst.

4. Elektrolyt für die Lithium-Schwefel-Batterie gemäß Anspruch 2, bei der die Verbindung auf Basis von Benzol 1,4-Difluorbenzol umfasst.

5. Elektrolyt für die Lithium-Schwefel-Batterie gemäß Anspruch 1, bei der das Lithiumsalz mindestens eines, ausgewählt aus der Gruppe, bestehend aus LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₃SO₂)₂, LiN(SO₂F)₂, Lithiumchlorboran, niedriger aliphatischer Lithiumcarbonsäure mit 4 oder weniger Kohlenstoffatomen, Lithiumtetraphenylborat und Lithiumimid, umfasst.

6. Elektrolyt für die Lithium-Schwefel-Batterie gemäß Anspruch 1, bei dem ein Molverhältnis des zweiten Lösungsmittels und des Lithiumsalzes 4:1 oder mehr beträgt.

7. Elektrolyt für die Lithium-Schwefel-Batterie gemäß Anspruch 1, bei dem das Molverhältnis des zweiten Lösungsmittels und des Lithiumsalzes 4,5:1 bis 8:1 beträgt.

8. Lithium-Schwefel-Batterie, umfassend eine positive Elektrode, die ein aktives Material der positiven Elektrode umfasst; eine negative Elektrode, die ein aktives Material der negativen Elektrode umfasst; und den Elektrolyten gemäß Anspruch 1.

9. Lithium-Schwefel-Batterie gemäß Anspruch 8, bei der das aktive Material der positiven Elektrode mindestens eines, ausgewählt aus der Gruppe, bestehend aus elementarem Schwefel und Schwefelverbindungen, umfasst.

10. Lithium-Schwefel-Batterie gemäß Anspruch 8, bei der das aktive Material der positiven Elektrode mindestens eines, ausgewählt aus der Gruppe, bestehend aus anorganischem Schwefel, Li₂Sₙ(n≥1), einer Disulfidverbindung, einer organischen Schwefelverbindung und einem Kohlenstoff-Schwefel-Polymer ((C₂Sₓ)ₙ, x = 2,5 bis 50, n ≥ 2), umfasst.

11. Lithium-Schwefel-Batterie gemäß Anspruch 8, bei der das aktive Material der negativen Elektrode mindestens eines, ausgewählt aus der Gruppe, bestehend aus Lithiummetall und Lithiumlegierung, umfasst.

## Revendications

1. Électrolyte pour une batterie au lithium-soufre comprenant un sel de lithium et un solvant organique non aqueux,
dans lequel le solvant organique non aqueux inclut un premier solvant comprenant un composé à base de benzène et un deuxième solvant comprenant 1,3-dioxolane,
dans lequel un rapport en volume du premier solvant et du deuxième solvant est 1:0,5 à 1:4.

2. Électrolyte pour la batterie au lithium-soufre selon la revendication 1, dans lequel le composé à base de benzène comprend un ou plusieurs éléments sélectionnés dans le groupe constitué de benzène, 1,4-difluorobenzène, 1,3,5-trifluorobenzène, 1,2,4,5-tetrafluorobenzène et hexafluorobenzène.

3. Électrolyte pour la batterie au lithium-soufre selon la revendication 2, dans lequel le composé à base de benzène comprend du benzène.

4. Électrolyte pour la batterie au lithium-soufre selon la revendication 2, dans lequel le composé à base de benzène comprend 1,4-difluorobenzène.

5. Électrolyte pour la batterie au lithium-soufre selon la revendication 1, dans lequel le sel de lithium comprend un ou plusieurs éléments sélectionnés dans le groupe constitué de LiCl, LiBr, Lil, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, chloroborane de lithium, acide carboxylique aliphatique inférieur de lithium ayant 4 atomes de carbone ou moins, borate de tétraphényle de lithium et imide de lithium.

6. Électrolyte pour la batterie au lithium-soufre selon la revendication 1, dans lequel un rapport molaire du deuxième solvant et du sel de lithium est 4:1 ou plus.

7. Électrolyte pour la batterie au lithium-soufre selon la revendication 1, dans lequel le rapport molaire du deuxième solvant et du sel de lithium est 4,5:1 à 8:1.

8. Batterie au lithium-soufre comprenant une électrode positive comprenant un matériau actif d'électrode positive, une électrode négative comprenant un matériau actif d'électrode négative ; et l'électrolyte selon la revendication 1.

9. Batterie au lithium-soufre selon la revendication 8, dans laquelle le matériau actif d'électrode positive comprend un ou plusieurs éléments sélectionnés dans le groupe constitué de soufre élémentaire et de composés de soufre.

10. Batterie au lithium-soufre selon la revendication 8, dans laquelle le matériau actif d'électrode positive comprend un ou plusieurs éléments sélectionnés dans le groupe constitué de soufre inorganique, Li₂Sₙ(n≥1), un composé de disulfure, un composé de soufre organique et un polymère de carbone-soufre ((C₂Sₓ)ₙ, x=2,5 à 50, n≥2).

11. Batterie au lithium-soufre selon la revendication 8, dans laquelle le matériau actif d'électrode négative comprend un ou plusieurs éléments sélectionnés dans le groupe constitué de lithium métal et d'alliage de lithium.
